# EUROPÄISCHE PATENTANMELDUNG

(11) **EP 1 215 866 A1**
(43) Veröffentlichungstag der Anmeldung: **19.06.2002**
(21) Anmeldenummer: 01811222.7
(22) Anmeldetag: 13.12.2001
(51) Int. Cl.: H04L 29/12, H04L 12/28

(54) **Verfahren zur drahtlosen Kommunikation zwischen Terminals innerhalb eines lokalen Netzwerkes**

(30) Priorität: 18.12.2000 CH 246200
(71) Anmelder: Swissvoice AG, 4500 Solothurn (CH)
(72) Erfinder: Baev, Stoyan, 4500 Solothurn (CH)
(74) Vertreter: Rutz, Peter

(57) **Zusammenfassung**

Die Erfindung betrifft ein Verfahren zur drahtlosen Kommunikation zwischen Terminals (1,2,3) innerhalb eines lokalen Netzwerks, bei dem die Kommunikation zwischen auf den Terminals (1,2,3) laufenden oder mit diesen verbundenen höheren Anwendungen durch Austausch von Datenpaketen abläuft und der Transport dieser Datenpakete zwischen den Terminals (1,2,3) drahtlos nach dem DECT-Protokoll oder einem ähnlichen Protokoll erfolgt. Erfindungsgemäss wird auf der Ebene des DECT-Protokolls oder des ähnlichen Protokolls wenigstens ein für eine höhere Anwendung kennzeichnender Parameter (Adresse), und/oder wenigstens ein Parameter(Identität), der unter dem DECT-Protokoll bzw. dem ähnlichen Protokoll zur Kennzeichnung eines Terminals (1,2,3) verwendet wird, zwischen Terminals (1,2,3) ausgetauscht.

## Beschreibung

Die Erfindung betrifft ein Verfahren zur drahtlosen Kommunikation zwischen Terminals innerhalb eines lokalen Netzwerks, bei dem die Kommunikation zwischen auf den Terminals laufenden oder mit diesen verbundenen höheren Anwendungen durch Austausch von Datenpaketen abläuft und der Transport dieser Datenpakete zwischen den Terminals drahtlos nach dem DECT-Protokoll oder einem ähnlichen Protokoll erfolgt gemäss Anspruch 1.

Das vom European Telecommunications Standards Institute, ETSI, normierte DECT-Verfahren (Digital Enhanced Cordless Telecommunication) betrifft die drahtlose Kommunikation zwischen verschiedenen Endeinrichtungen (Terminals), z.B. Telefon-Endgeräten, Computern und dergleichen. Des weiteren sind DECT-ähnliche Verfahren bekannt, zu denen beispielsweise Cordless Systeme CT2, PHS oder das von der amerikanischen Telecommunications Industry Association (TIA) unter der Normenfamilie TIA/EIA-662 standardisierte PWT (Personal Wireless Telecommunications) gehören.

Eine Übersicht über digitale Mobilfunksysteme ist in [1], Jerry D. Gibson, THE COMMUNICATIONS HANDBOOK, CRC PRESS, Boca Raton 1997, Kapitel 86, Seiten 1208-1225, (siehe insbesondere Seite 1212, Tabelle 86.1 oder Kapitel 77, Seite 1077, Tabelle 77.4) angegeben. Das DECT-System ist in [1], Kapitel 92, Seiten 1305-1326 oder in [2], B. Walke, Mobilfunknetze und ihre Protokolle, Band 2, 2. Auflage, Teubner Verlag, Stuttgart 2000, Kapitel 5, Seiten 107-216 beschrieben.

Das Personal Handyphone System (PHS) ist in [2], Kapitel 7 (siehe Kapitel 7.2, Systemüberblick, beschrieben. Ein weiterer Überblick über schnurlose Fernsprechsysteme findet sich in [2], Kapitel 4, Seiten 101-106.

Das DECT-System verwendet FDMA- (frequency division multiple access), TDMA- (time division multiple access) sowie TDD- (time division duplex) Verfahren für die Übertragung. Im Frequenzbereich von 1880 MHz bis 1900 MHz sind zehn Kanäle vorgesehen. Über jeden Kanal werden DECT-Rahmen mit einer Länge von 10 ms übertragen, die für jede Übertragungsrichtung (Basisstation an Mobilendgerät sowie Mobilendgerät an Basisstation) je 12, insgesamt also 24 DECT-Slots (Zeitschlitze) mit je 424 Bits aufweisen.

Jeder DECT-Slot weist 32 Synchronisationsbits, 4 Kollisionsdetektionsbits, ein 40 Bit langes A-Feld, einen zusätzlichen A-Feld Kopf mit 8 Bits, eine A-Feld Checksumme mit 16 Bits sowie ein 320 Bit langes B-Feld und eine B-Feld Checksumme mit 4 Bit auf. Im A-Feld sind Steuerdaten und im B-Feld sind Daten von Gesprächen oder weiteren Diensten enthalten.

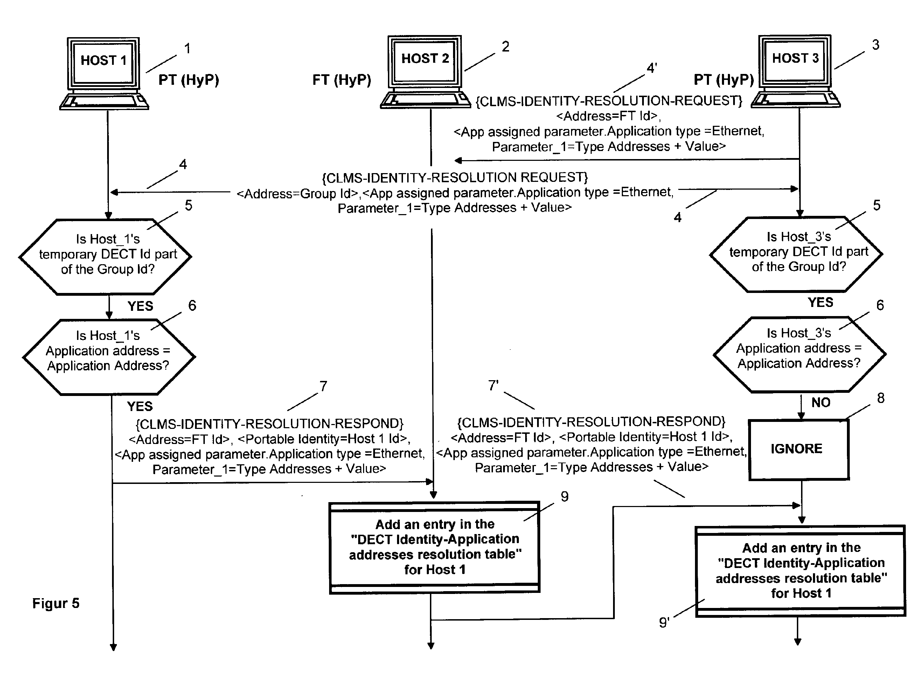

Für die Übertragung der Daten des A- und des B-Feldes werden die untersten beiden Schichten, die Bitübertragungsschicht (Physical Layer) und die für die Mehrfachzugriffskontrolle vorgesehene MAC- (Medium Access Control) Schicht, der in [2], Seite 123, Abbildung 5.16 gezeigten DECT-Protokollarchitektur gemeinsam benutzt. Die Steuerdaten des A-Feldes werden in den höheren Schichten in der sogenannten C-Plane, die eine Sicherungsschicht DLC (Data Link Control) und eine Vermittlungsschicht NWK aufweist und die Nutzdaten in den höheren Schichten in der sogenannten U-Plane übertragen, die eine Sicherungsschicht DLC (Data Link Control) aufweist. In [2], Abbildung 5.16 ist ferner die Lower Layer Management Entity LLME dargestellt, welche die Prozesse der genannten Schichten koordiniert und steuert.

Der Multipart EN 300 175 der DECT-Norm spezifiziert grundsätzliche Anforderungen an die physikalischen Gegebenheiten und das Protokoll bei DECT-Schnittstellen (DECT Common Interface). Eine Vielzahl von anderen Normen, auch als DECT-Profile bezeichnet, beschreiben spezielle DECT-Anwendungen. Beispielsweise beschreibt das DECT-Profil EN 301 649 Anforderungen für den Fall, dass die DECT-Technologie wie eingangs beschrieben als drahtloses Übertragungsmedium für den Datenaustausch zwischen höheren Anwendungen verwendet wird. Ähnliche Vorschriften gibt es zum PWT-Verfahren.

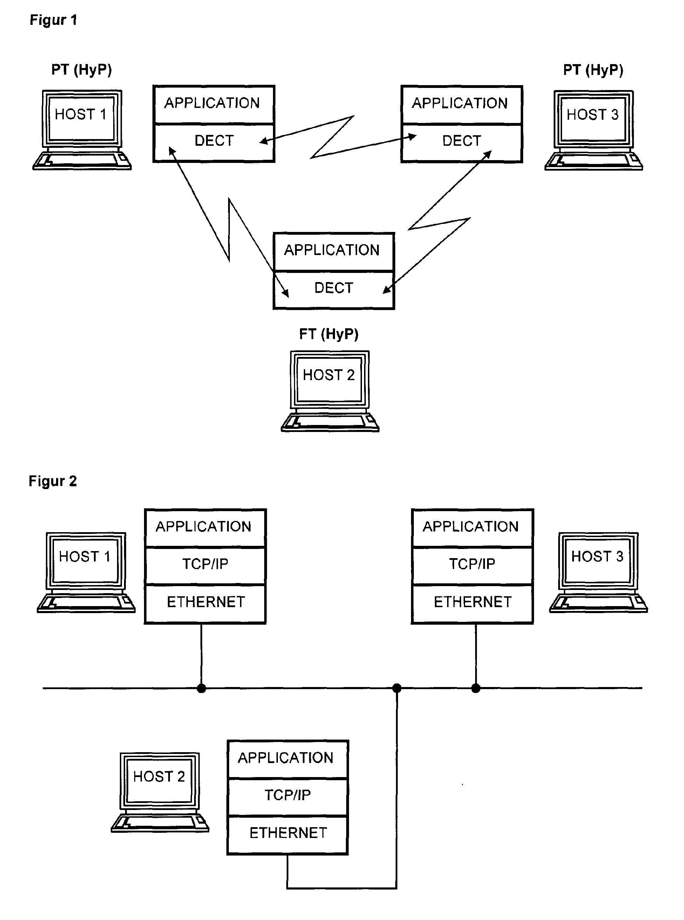

Figur 1 zeigt ein Beispiel für drahtlose Kommunikation gemäss DECT zwischen mehreren Terminals, im folgenden auch als Hosts bezeichnet, wobei das DECT-Protokoll sowohl als Übertragungsprotokoll für die Übertragung von Datenpaketen als auch zur Realisierung des Netzwerks genutzt wird. Das DECT-Protokoll regelt dabei die Übertragung von Datenpaketen auf der Netzwerkebene und die physikalische Übertragung der Datenpakete über das drahtlose Medium, d.h. das Senden und Empfangen von elektromagnetischen Wellen. Gemäss DECT hat jeder Host eine statische DECT-Identität, die vom Hersteller des vom Host benutzten DECT-Moduls vorgegeben wurde.

Jedem Mobilegerät wird eine Gerätenummer zugewiesen, mit der sich z.B. gestohlene Geräte sperren lassen können. Diese Internatonal Portable Equipment Identity (IPEI) ist 36 Bit lang und besteht aus dem 16 Bit langen Equipment Manufacturer's Code (EMC), der den Hersteller angibt, und der 20 Bit langen Portable Equipment Serial Number (PSN), mittels der für jeden Hersteller ca. 1 Million Mobilgeräte nummerierbar sind.

Des weiteren kann jeder Host eine oder mehrere dynamische DECT-Identitäten haben, die ihm während der Registrierungs-/Anmeldungsphase von dem Terminal zugewiesen wurde, das die Rolle des FT (Fixed Radio Termination) übernimmt.

Die einzelnen Terminals des DECT-Netzwerks sind durch ihre verschiedenen DECT-Identitäten auf der physikalischen Ebene unterscheidbar. Es handelt sich bei der DECT-Technologie daher um ein "nicht-anonymes" Übertragungsmedium. Im Prinzip könnte daher die Datenübertragung zwischen zwei Terminals direkt durch Herstellen einer DECT-Verbindung zwischen diesen realisiert werden. Üblicherweise kommunizieren zwei mobile Terminals (PT: Portable Radio Termination), in Fig. 2 z.B. Host 1 und Host 3, jedoch indirekt über den FT des Netzwerks, der in Fig. 2 vom Host 2 realisiert wird. Wenn das DECT-Merkmal Distributed Communications verwendet wird, kann auch direkt eine Verbindung zwischen den beiden als PT agierenden Hosts hergestellt werden. Im ersten Fall stellt Host 1 gemäss EN 301 649 eine Verbindung zum FT Host 2 her, dessen Identität Host 1 bekannt ist, und sendet das für Host 3 bestimmte Datenpaket. Host 2 empfängt das Datenpaket und leitet es an eine ihm zugeordnete höhere Anwendung weiter, die die DECT-Identität von Host 3 ermitteln muss, um das Datenpaket zuzustellen. Im zweiten Fall muss Host 1 selbst die Identität von Host 3 kennen.

Viele höhere Anwendungen kommunizieren allerdings nicht direkt nach dem DECT-Protokoll, sondern tauschen Datenpakete unter Verwendung anderer Datenübertragungsprotokolle aus, insbesondere Ethernet, Token Ring, IP, PPP, V.24. Diese Verfahren sind grundsätzlich für die Kommunikation über ein "anonymes" Transportmedium ausgelegt, welches die angeschlossenen Terminals nicht von selbst unterscheiden kann, z.B. ein Datenkabel. Figur 2 zeigt ein Beispiel für drahtgebundene Kommunikation zwischen einer Mehrzahl von solchen durch Kabel verbundenen Terminals. Die auf ihnen laufenden Anwendungen nutzen für die Übertragung von Datenpaketen das Ethernet-Protokoll als Übertragungsprotokoll, das die Übertragung über das physikalische Übertragungsmedium, hier das Kabel, zwischen den verschiedenen Anschlusspunkten der Terminals an das Übertragungsmedium regelt.

Das TCP/IP Protokoll, dessen Referenzmodell in [1], Kapitel 41, Seiten 567-576 oder in [3], Andrew S. Tanenbaum, COMPUTER NETWORKS, 3rd Edition, Prentice Hall PTR, New Jersey 1996, Seiten 28-39 beschrieben ist, wird als Netzwerkprotokoll genutzt und regelt die Übertragung auf Netzwerkebene. Jeder Host hat eine Ethernet-Adresse, die vom Hersteller der vom Host benutzten Ethernet-Karte zugewiesen wurde, und eine üblicherweise vom Netzwerkadministrator zugewiesene TCP/IP Adresse. Die einem Terminal zugeordneten höheren Anwendungen können ebenfalls eigene Adressen haben. Zum richtigen Routen eines Datenpakets zwischen zwei Anwendungen müssen die Ethernet- und die TCP/IP-Adresse des Hosts bekannt sein, auf dem die Empfänger-Anwendung residiert. Denn sowohl das Ethernet- als auch das TCP/IP-Protokoll sind verbindungslose Protokolle, d.h. es wird keine direkte Verbindung zwischen zwei Terminals aufgebaut, sondern jedes Datenpaket wird auf das "anonyme" physikalische Übertragungsmedium, hier über das Kabel, gegeben und von jedem weiteren Terminal empfangen. Jedes dieser weiteren Terminals überprüft, ob das Datenpaket eine der eigenen IP- oder Ethernet-Adressen aufweist. Das Datenpaket wird dann nur von dem Host, für den es tatsächlich bestimmt ist, verwertet, während es von den anderen Hosts verworfen wird.

Es ist bekannt, bei einer derartigen Kommunikation zwischen höheren Anwendungen die DECT-Technologie als drahtloses Transportmedium für die Übertragung von Datenpaketen anzuwenden, z.B. um ein drahtloses lokales Netzwerk aus einzelnen Terminals aufzubauen. Jedes Terminal erhält über ein DECT-Modul die Möglichkeit, drahtlos zu kommunizieren. Die DECT-Technologie ersetzt in diesem Fall das oben beschriebene Kabel, während die Kommunikation der höheren Anwendungen davon unbeeinflusst abläuft, im obigen Beispiel über die Protokolle TCP/IP und Ethernet. Entsprechend können DECT-ähnliche Protokolle verwendet werden, z.B. PWT.

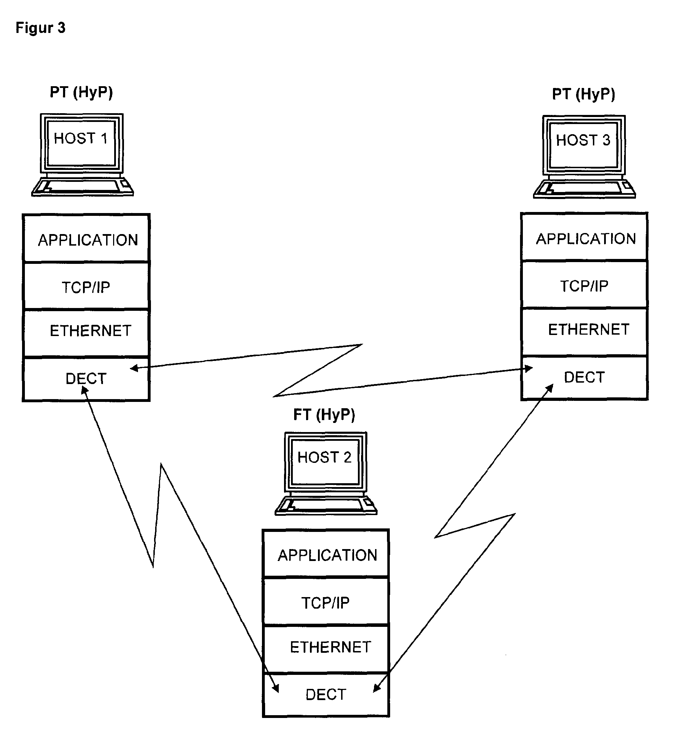

Ein typisches Szenario dieses sogenannten DECT/Ethernet Interworking ist im DECT-Profil EN 301 649 DPRS (DECT Packet Radio Service) beschrieben und in Figur 3 schematisch dargestellt. Dabei residieren die drei Protokolle DECT, Ethernet und TCP/IP in jedem Host. Jeder Host hat eine vom Hersteller der Ethernetkarte zugewiesene Ethernet-Adresse, eine vom Netzwerkadministrator zugewiesene TCP/IP-Adresse und eine statische DECT Identität, die vom Hersteller des vom Host benutzten DECT-Moduls vorgegeben wurde. Des weiteren kann der Host weitere dynamische, während der Subskriptionsphase zugewiesene DECT-Identitäten haben. Die Übermittlung eines Datenpakets von Host 1 zu Host 3 wird auf der Netzwerk-Ebene vom TCP/IP-Protokoll geregelt. Das Ethernet-Protokoll regelt die Übertragung zwischen verschiedenen Zugangspunkten zum physikalischen Übertragungsmedium, z.B. einem Kabel, und das DECT-Protokoll sorgt für die drahtlose Übermittlung, z.B. anstelle des Kabels.

Bei den bekannten Verfahren, bei denen DECT als drahtloses Übertragungsmedium für einen auf einem Internetprotokoll basierenden Datenaustausch eingesetzt wird, wird DECT also wie ein "anonymes" Übertragungsmedium behandelt: Sämtliche Datenpakete werden unabhängig von ihrem Zielhost durch DECT-Verbindungen an alle Hosts übermittelt, dabei jedoch nur von den Zielhosts verwertet. Dadurch wird die Übertragungskapazität, die bei der drahtlosen Kommunikation im Gegensatz zur drahtgebundenen ohnehin knapp ist, stark beansprucht. Die Eigenschaften von DECT oder ähnlichen Technologien als "nicht anonymes" Übertragungsmedium werden nicht genutzt.

Zwar sind sogenannte Adress Retrieval (Resolution) Protokolle (ARP) bekannt, die auf TCP/IP und Ethernet-Ebene einem Terminal die Ermittlung des Ethernet- und TCP/IP-Adresspaars eines weiteren Terminals ermöglichen. Die Kenntnis der Ethernet- und TCP/IP-Adresse des Zielterminals ist notwendig für das korrekte Routing von Datenpaketen, die für eine auf dem Ziel-Terminal laufende höhere Anwendung bestimmt sind. Beim Adress Retrieval Protokoll generiert das initiierende Terminal, das ein Datenpaket an einen Host mit einer bestimmten IP-Adresse senden möchte, ein kurzes Datenpaket (Address-Resolution-Datenpaket), das über eine spezielle Ethernet Multicast Adresse an alle Hosts des Netzwerks gesendet wird. Das Datenpaket enthält die eigene IP- und Ethernet-Adresse des initiierenden Terminals sowie die IP-Adresse des Ziels-Hosts (Ziel-IP-Adresse) und die Aufforderung (REQUEST) an den Ziel-Host, unter Mitteilung seiner Ethernet-Adresse zu antworten. Jeder Host empfängt diese Meldung bzw. dieses Datenpaket auf der Ebene des Ethernet-Protokolls und leitet es weiter zum entsprechenden TCP/IP Protokoll desselben Hosts. Auf der TCP/IP-Ebene wird die Ziel-IP-Adresse mit der eigenen IP-Adresse verglichen. Bei Übereinstimmung beider Adressen sendet der Host ein kurzes Datenpaket zurück an den initiierenden Host, in dem er die eigene Ethernet-Adresse angibt. Falls die Adressen nicht übereinstimmen, verwirft der Host auf TCP/IP-Ebene das Datenpaket (siehe [3], Seiten 420-424).

Das DECT-Protokoll stellt hingegen keine eigenen Prozeduren zur Ermittlung der Adressen und Identitäten der beteiligten Terminals zur Verfügung. Durch die auf TCP/IP- und Ethernet-Ebene ablaufenden bekannten Prozeduren zur Adressermittlung und Adresszuweisung wird wertvolle DECT-Übertragungskapazität und Speicherplatz beansprucht.

Der Erfindung liegt daher die Aufgabe zugrunde, ein Verfahren zur drahtlosen Kommunikation, bei dem DECT oder ein ähnliches Protokoll als drahtloses Übertragungsmedium genutzt wird, dahingehend zu verbessern, dass die zur Übertragung von Daten an den richtigen Empfänger notwendige Übertragungskapazität reduziert wird. Der Erfindung liegt weiterhin die Aufgabe zugrunde, das DECT-Protokoll oder ein ähnliches Protokoll derart zu verbessern, dass Adressen und Identitäten der beteiligten Terminals auf dieser Ebene ermittelt, einander zugeordnet oder zugewiesen werden können. Das Ermitteln, Zuordnen und Zuweisen dieser Parameter soll einfach und die dazu notwendige Übertragungskapazität so gering wie möglich sein.

Die Aufgabe wird gelöst durch ein Verfahren mit den Merkmalen von Anspruch 1. Vorteilhafte Weiterbildungen des Verfahrens ergeben sich aus den abhängigen Ansprüchen, den Figuren und der Beschreibung.

Erfindungsgemäss wird bei einem Verfahren der eingangs genannten Art auf der Ebene des DECT-Protokolls oder des ähnlichen Protokolls wenigstens ein für eine höhere Anwendung kennzeichnender Parameter (Adresse), und/oder wenigstens ein Parameter, der unter dem DECT-Protokoll bzw. dem ähnlichen Protokoll zur Kennzeichnung eines Terminals verwendet wird, (Identität) zwischen Terminals ausgetauscht. Entsprechende Prozeduren werden auf DECT-Ebene zur Verfügung gestellt. Die von einem Terminal erhaltenen Informationen über ein anderes Terminal werden vorzugsweise lokal abgespeichert, z.B. in einer Adresstabelle, und können fortan zum Aufbau einer direkten DECT-Verbindung zum anderen Terminal genutzt werden, falls an eine diesem zugeordnete höhere Anwendung Daten zu übertragen sind. Auf diese Weise ist die ungerichtete Datenübertragung an sämtliche Terminals vermeidbar, und die Eigenschaften von DECT oder dem ähnlichen Protokoll als "nicht-anonymes" Übertragungsmedium sind optimal nutzbar. Die Erfindung nutzt vorteilhaft die Tatsache, dass im "nicht-anonymen" DECT-Netzwerk die teilnehmenden Terminals an sich identifizierbar und unterscheidbar sind und somit auf eine hinsichtlich der Bandbreite, Übertragungskapazität und Speicherplatz aufwendige transparente Übermittlung von externen Parametern für bzw. von auf den Terminals laufende Anwendungen verzichtet werden kann.

Im Zusammenhang mit der Erfindung werden die 'Begriffe "Identität" und "Adresse" mit der folgenden Bedeutung benutzt:

Mit "Identität" wird eine unter dem DECT-Protokoll oder dem ähnlichen Protokoll zur Kennzeichnung eines Terminals verwendete Identität oder Adressierung bezeichnet, z.B. RFPI (Radio Fixed Part Identity, siehe EN 300 175-1 V1.6.0, 2001-09, Seite 14), IPUI (International Portable User Identity, siehe [2], Kapitel 5.10, Seiten 184-188), TPUI (Temporary Portable User Identity, siehe [2], Kapitel 5.10, Seiten 184-188), PMID (Portable MAC Identity, siehe EN 300 175-4 V1.4.2, 1999-06, Seite 69).

Mit "Adresse" wird eine unter dem verwendeten höheren Protokoll, das nicht DECT oder das ähnliche Protokoll ist, zur Kennzeichnung einer dem Terminal zugeordneten höheren Anwendung verwendete Identität oder Adressierung bezeichnet, z.B. eine Ethernet-Adresse oder eine IP (Internet Protokoll)-Adresse oder Token Ring-Adresse oder ein weiterer auf ein Kommunikationsprotokoll der höheren Anwendung bezogener Parameter. Mit dem Begriff "Lokales DECT-Netzwerk" bzw. "DECT-LAN" (DECT local network) wird eine Gruppe von Terminals bezeichnet, die miteinander nach einem höheren Protokoll, z.B. Ethernet, IP, kommunizieren und den physikalischen Datenaustausch nach dem DECT-Protokoll oder dem ähnlichen Protokoll abwickeln, wie beispielsweise in Figur 3 dargestellt. Die Erfindung bezieht sich auf ein solches DECT-LAN.

Die Erfindung stellt auf der Ebene des DECT-Protokolls oder des DECT-ähnlichen Protokolls Prozeduren zur Verfügung, mit denen Adressen ermittelt, mitgeteilt, zugeordnet und ausgetauscht werden können. Des weiteren werden Prozeduren beschrieben, mit denen zu einer gegebenen Adresse die zugehörige Identität ermittelbar ist.

Vorzugsweise empfängt ein Terminal wenigstens eine einem anderen Terminal zugeordnete Adresse und/oder Identität und speichert die empfangene Adresse zusammen mit der dem anderen Terminal zugeordneten Identität oder die empfangene Identität zusammen mit der dem anderen Terminal zugeordneten Adresse ab, beispielsweise in einer Adress-Tabelle. In der Adresstabelle sind beispielsweise alle zu einem bestimmten Terminal bekannten Informationen abgelegt, z.B. Identität, Ethernet-Adresse, IP-Adresse. Diese Information kann vorteilhaft zum korrekten und direkten Routen von Datenpaketen, die von der dem einen Terminal zugeordneten Anwendung erzeugt wurden, an das betreffende Terminal genutzt werden, indem das Terminal fortan den Aufbau einer direkten Verbindung zum betreffenden Terminal veranlasst.

Nachfolgend werden Beispiele für erfindungsgemässe Prozeduren und deren Einsatzmöglichkeiten unter Bezugnahme auf die Zeichnungen beschrieben. Es zeigen schematisch:
- Fig. 1: Ein Beispiel für Kommunikation zwischen drei Terminals nach dem DECT-Protokoll (Stand der Technik);
- Fig. 2: ein Beispiel für Kommunikation zwischen drei Terminals nach dem Ethernet- und TCP/IP-Protokoll (Stand der Technik);
- Fig. 3: ein Beispiel für Kommunikation zwischen drei Terminals in einem DECT-LAN;
- Fig. 4: ein Beispiel für den Ablauf einer Prozedur zur Identitätsermittlung (FT-initiiert, verbindungslos);
- Fig. 5: ein weiteres Beispiel für den Ablauf einer Prozedur zur Identitätsermittlung (PT-initiiert, verbindungslos);
- Fig. 6: ein weiteres Beispiel für den Ablauf einer Prozedur zur Identitätsermittlung (PT-initiiert, verbindungslos);
- Fig. 7: ein weiteres Beispiel für den Ablauf einer Prozedur zur Identitätsermittlung (verbindungsorientiert);
- Fig. 8: ein Beispiel für den Ablauf einer Prozedur zur Adresszuweisung (FT-initiiert);
- Fig. 9: ein weiteres Beispiel für den Ablauf einer Prozedur zur Adresszuweisung (PT-initiiert);
- Fig. 10: ein Beispiel für den Ablauf einer Prozedur zur Abgabe von Adressinformation (FT-initiiert);
- Fig. 11: ein weiteres Beispiel für den Ablauf einer Prozedur zur Abgabe von Adressinformation (PT-initiiert);
- Fig. 12: ein Beispiel für den Ablauf einer selbständig von einem Terminal ausgelösten Prozedur zur Abgabe von Adressinformation.

Die Figuren 1 bis 3 wurden bereits in der Beschreibungseinleitung beschrieben. Die Erfindung wird beispielsweise in einem Umfeld gemäss Figur 3 eingesetzt.

Gemäss einer ersten Ausbildung der Erfindung erfragt ein erstes Terminal auf der Ebene des DECT-Protokolls oder des ähnlichen Protokolls die Identität eines Terminals mit einer bestimmten, dem ersten Terminal bekannten Adresse ("Identity Resolution" Prozedur). Dazu sendet das Terminal eine Meldung bzw. Anfrage, das diese Adresse enthält. Alle Terminals, die diese Anfrage empfangen, vergleichen die übermittelte Adresse mit der Adresse bzw. den Adressen der ihnen zugeordneten Anwendungen. Das Terminal, das die angefragte Adresse hat, sendet eine Antwortmeldung an das erste Terminal, in der es seine Identität angibt. Diese an das erste Terminal rückgemeldete Identität wird dann zusammen mit der bekannten Adresse abgespeichert und kann zum Aufbau von Adresstabellen und schliesslich zum korrekten Routen von Daten zwischen den höheren Anwendungen über DECT verwendet werden. In einer Anfrage können mehrere Adressen gesendet werden. Im Falle von mehreren Adressen können auch mehrere Antworten an das erste Terminal zurückgesendet werden. Die Prozedur kann von jedem Terminal eingeleitet werden, wobei verbindungslose oder verbindungsorientierte Prozeduren verwendet werden können.

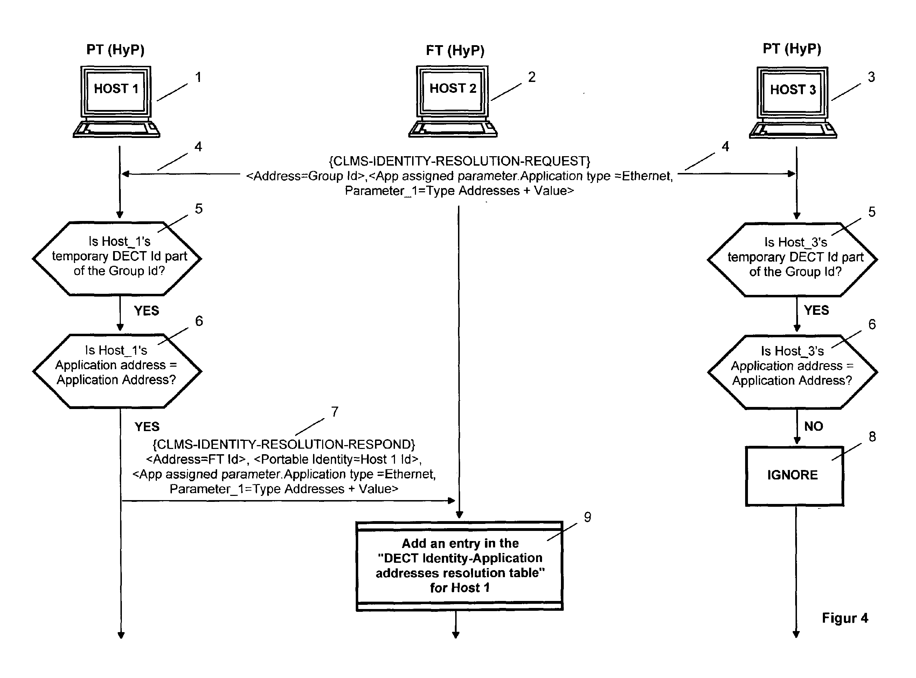

Ein Beispiel für den Ablauf der "Identity Resolution" Prozedur ist in Figur 4 dargestellt. Der Host 2, der hier die Funktion eines DECT-FT (Fixed radio Termination) oder eines HyP (Hybrid Part, siehe EN 300175-1 V1.6.0, 2001-09, Seite 10) hat, verfasst eine verbindungslose Anfrage 4 (Identity-Resolution-Request). Diese enthält beispielsweise einen Identitätsteil und einen Adressteil. Im Identitätsteil sind die Identität oder die Identitäten der Terminals enthalten, an die die Anfrage 4 gesendet wird. Beispielsweise wird die Anfrage 4 mittels einer Gruppenidentität an alle Terminals dieser Gruppe, hier die als PT agierenden Hosts 1 und 3, gesendet. Im Adressteil sind die Adresse oder die Adressen der Anwendungen enthalten, zu denen die entsprechende Identität des Terminals erfragt wird, im vorliegenden Beispiel die Adresse von Host 1. Bei Empfang der Anfrage 4 überprüfen die Hosts 1 und 3 die übertragenen Identitäten (Verfahrensschritt 5). Wenn diese mit einer der Identitäten des Hosts 1 bzw. 3 übereinstimmt, vergleicht der Host 1 bzw. 3 die übertragene Adresse mit den eigenen Adressen (Verfahrensschritt 6), ansonsten wird die Anfrage ignoriert. In Figur 4 stimmt die übertragene Adresse mit einer Adresse von Host 1 überein, der daraufhin eine Antwort 7 im verbindungslosen Modus an den initiierenden Host 2 überträgt. Die Antwort 7 enthält die als übereinstimmend festgestellte Adresse und vorzugsweise die Identität des Terminals/Hosts 1. Gegebenenfalls kann die Identität von Host 1 auch aus anderen Quellen ermittelt werden, z.B. anhand der für den Verbindungsaufbau zum anfragenden Terminal verwendeten PMID-Information (Portable MAC Identity).

Host 3, dessen Adresse nicht passt, verwirft die Anfrage 4 (Verfahrensschritt 8). Das initiierende Terminal Host 2 speichert die von Host 1 übertragenen Daten (Adresse und Identität) in einer Tabelle (Verfahrensschritt 9) bzw. aktualisiert die Host 1 betreffenden Einträge, so dass diese Daten für zukünftigen direkten DECT-Verbindungsaufbau zur Übertragung von Anwendungsdaten von Host 2 zum betreffenden Ziel-Terminal, hier Host 1, genutzt werden können.

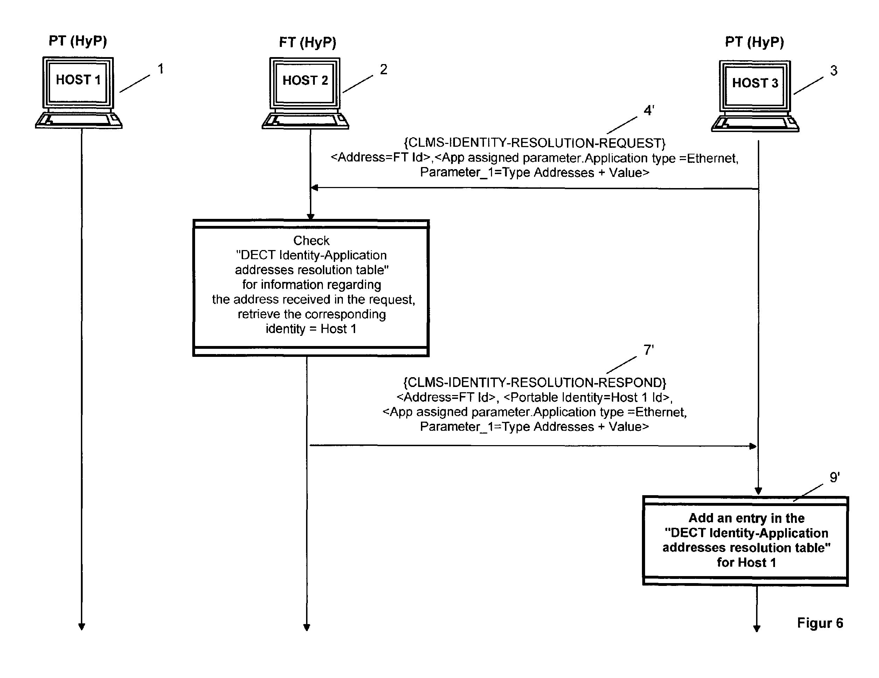

Die Figuren 5 und 6 zeigen ein weiteres Beispiel für den Ablauf der "Identity Resolution" Prozedur für den Fall, dass das anfragende Terminal, hier Host 3, ein PT oder ein HyP im PT-Mode ist. Host 3 generiert eine verbindungslose Anfrage 4' (Identity-Resolution-Request) und überträgt diese an den FT des DECT-LANs, hier Host 2. Die Anfrage 4' enthält wenigstens einen Adressteil mit der bzw. den festzustellenden Adressen. Der als FT agierende Host 2 überprüft die übertragene Adresse und stellt fest, ob diese mit der Adresse einer seiner Anwendungen übereinstimmt. Falls dies der Fall ist oder dem Host 2 die gewünschte Information schon durch einen entsprechenden Eintrag in seiner Adresstabelle zur Verfügung steht, sendet Host 2 direkt eine Antwort mit diesen Angaben an das anfragende Terminal Host 3 (Fig. 6). Andernfalls erzeugt der FT Host 2 eine Anfrage 4 (Identity-Resolution-Request), mit der die Adresse an alle weiteren Terminals des lokalen DECT-Netzwerks, hier Host 1 und Host 3, übertragen wird, vgl. Fig. 4. Die Anfrage 4 wird von den angesprochenen Terminals wie bereits in Fig. 4 beschrieben verarbeitet (Verfahrensschritte 5, 6, 8). Der als FT agierende Host 2 speichert die in der Antwortmeldung 7 (Identity-Resolution-Respond) übermittelte Adresse und Identität in seiner eigenen Adresstabelle (Verfahrensschritt 9). Ausserdem leitet er die Antwort in einer weiteren Antwortmeldung 7' (Identity-Resolution-Respond) an das anfragende Terminal Host 3 weiter, der die Daten ebenfalls in seine lokale Adresstabelle einträgt (Verfahrensschritt 9').

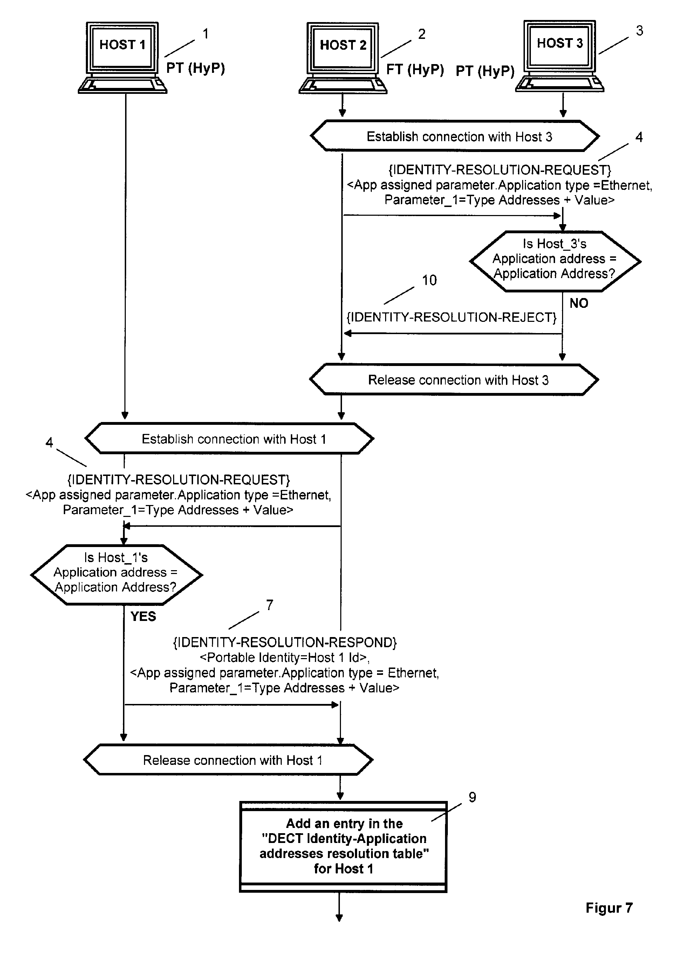

Alternativ zu der verbindungslosen Anfrage kann die "Identity Resolution" Prozedur auch verbindungsorientiert ablaufen. Neben speziell dafür definierten neuen Prozeduren können auch bekannte MM (Mobility Management) oder CC (Call Control) Prozeduren genutzt werden, wobei mit bekannten Meldungen neue Informationselemente, die die betreffende Adresse und Identität enthalten, ausgetauscht werden. Ein Beispiel für eine solche verbindungsorientierte Prozedur ist in Fig. 7 gezeigt. Bei dieser Verfahrensvariante werden dieselben Meldungen (Anfrage 4, Antwort 7) wie bereits geschildert ausgetauscht, jedoch wird vom anfragenden Terminal, hier Host 2, mit jedem weiteren Terminal 1 bzw. 3 nacheinander und unabhängig von den anderen kommuniziert. Dazu wird vom initiierenden Terminal 2 eine Verbindung zu Host 3 aufgebaut und die Anfrage 4 übertragen. Das angesprochene Terminal, hier Host 3, überprüft die übertragene Adresse und sendet im Gegensatz zum verbindungslosen Modus eine ablehnende Meldung 10, falls diese nicht mit einer eigenen Adresse übereinstimmt. Bei Empfang der ablehnenden Meldung 10 löst der initiierende Host 2 die Verbindung mit Host 3 und baut eine Verbindung zu Host 1 auf. Dieser überprüft ebenfalls die übertragene Adresse, stellt eine etwaige Übereinstimmung fest und sendet eine Meldung 7, in der er seine Identität mitteilt. Bei Empfang dieser Meldung 7 wird die Verbindung gelöst und die erhaltenen Daten in die lokale Adresstabelle von Host 2 eingetragen.

Falls das anfragende Terminal ein PT ist, kann er auch im verbindungsorientierten Modus analog zum in Fig. 5 gezeigten Verfahren den FT des DECT-LANs um Unterstützung nachsuchen. Im Falle eines Distributed Communication Netzwerks (DCDL-Netz), bei dem die Teilnehmer direkt miteinander kommunizieren, ist die Unterstützung durch den FT entbehrlich. Das anfragende Terminal kann entweder jedes Mitglied des DCDL-Netzes direkt nacheinander ansprechen oder die Anfrage vermittels Gruppen- oder kollektiver DECT-Identitäten an alle Mitglieder verteilen.

In einer weiteren erfindungsgemässen Verfahrensvariante kann ein Terminal die Adresse eines weiteren Terminals, das eine bestimmte dem anfragenden Terminal bekannt Identität hat, ermitteln ("Application Parameter Resolution" Prozedur). Dazu veranlasst das anfragende Terminal die Übertragung einer Meldung mit wenigstens dieser Identität an wenigstens ein weiteres Terminal, vorzugsweise an alle Terminals des lokalen Netzwerks. Jedes Terminal, das diese Meldung empfängt, stellt eine etwaige Übereinstimmung von ihm zugewiesenen Identitäten mit der übertragenen Identitäten fest. Im Falle der Übereinstimmung wird die Rückübertragung einer Meldung mit wenigstens einer Adresse eines Terminals und vorzugsweise auch der übertragenen Identität an das anfragende Terminal veranlasst. Die "Application Parameter Resolution" Prozedur läuft im wesentlichen so ab wie die bereits beschriebene "Identity Resolution" Prozedur mit dem Unterschied, dass statt der dem anfragenden Terminal bekannten Adresse nun eine ihm bekannte Identität in einer Anfrage 7 übertragen wird. Auch diese Prozedur kann verbindungsorientiert oder verbindungslos ablaufen und von einem als PT oder als FT agierenden Terminal eingeleitet werden. In einer weiteren erfindungsgemässen Verfahrensvariante ordnet ein erstes Terminal auf der Ebene des DECT-Protokolls oder des ähnlichen Protokolls wenigstens einer Anwendung, die auf einem weiteren Terminal läuft oder mit diesem verbunden ist, wenigstens eine Adresse zu ("Application Address Allocation" Prozedur). Eine diese Adresse enthaltende Meldung wird dabei an das weitere Terminal übertragen. Diese Prozedur ist von Vorteil, wenn in einem DECT-LAN die Rolle des FT von einem einfachen Gerät ohne Benutzerinterface, z.B. einem Router, und die Rolle des PT von Rechnern mit vorhandenem Benutzerinterface (Tastatur und Bildschirm) übernommen wird. Nach dem DECT-Protokoll ist nur ein als FT gestaltetes Terminal imstande, adressbezogene und andere Parameter zuzuweisen. Mit der "Application Address Allocation" Prozedur ist es nun möglich, auch an einem als PT agierenden DECT-Terminal Adressen einzugeben, die dann den entsprechenden Terminals zugeordnet werden. Die Prozedur kann verbindungsorientiert oder verbindungslos, PT- oder FT- initiiert ablaufen.

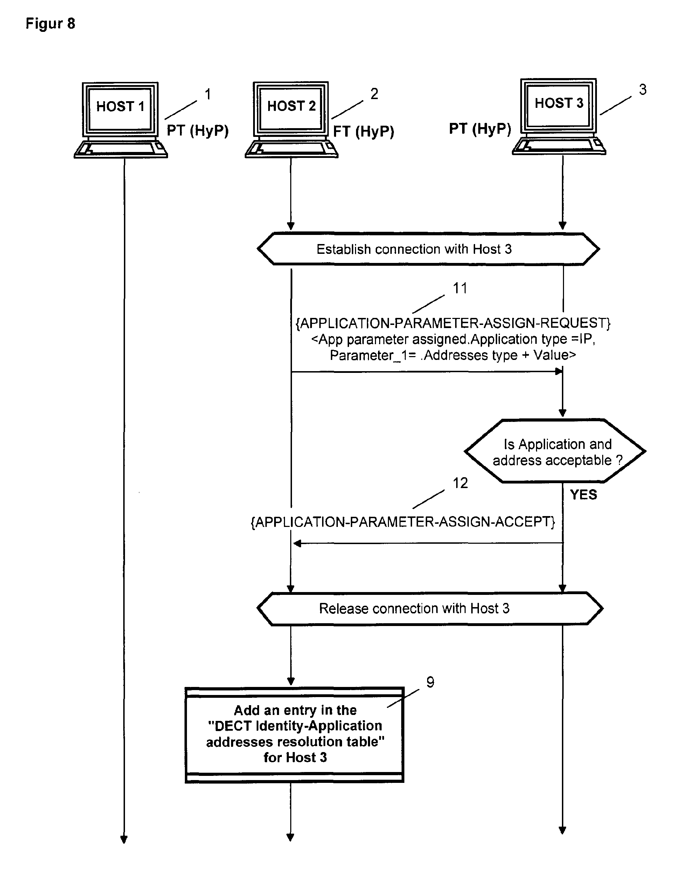

Figur 8 zeigt schematisch den Ablauf einer solchen, vom als FT agierenden Host 2 eingeleiteten Prozedur zur Adresszuweisung. Der FT baut eine Verbindung zum PT Host 3 auf und überträgt eine Meldung 11, mit der er um Adresszuweisung bittet (Application-Parameter-Assign-Request). Die Meldung 11 enthält vorzugsweise wenigstens ein Informationselement, mit dem angegeben wird, für welche Anwendung welche Parameter zugewiesen werden sollen. In Figur 8 soll Host 3 eine IP- Adresse XYZ zugewiesen werden. Bei Erhalt dieser Meldung 11 überprüft der PT Host 3 die übertragenen Parameter und bestimmt, ob diese der betreffenden Anwendung zugewiesen werden können. Falls dies der Fall ist, sendet Host 3 an Host 2 eine Annahme-Meldung 12, mit der der Vorschlag angenommen wird (Application-Parameter-Assign-Accept). Falls der Vorschlag zurückgewiesen werden soll, sendet Host 3 eine ablehnende Meldung, mit der dieses mitgeteilt wird (hier nicht dargestellt). Diese kann Alternativvorschläge oder Informationen zur Ursache der Zurückweisung enthalten. Der als FT agierende Host 2 kann die genehmigte Adresse von Host 3 in seine Adresstabelle übernehmen (Verfahrensschritt 9).

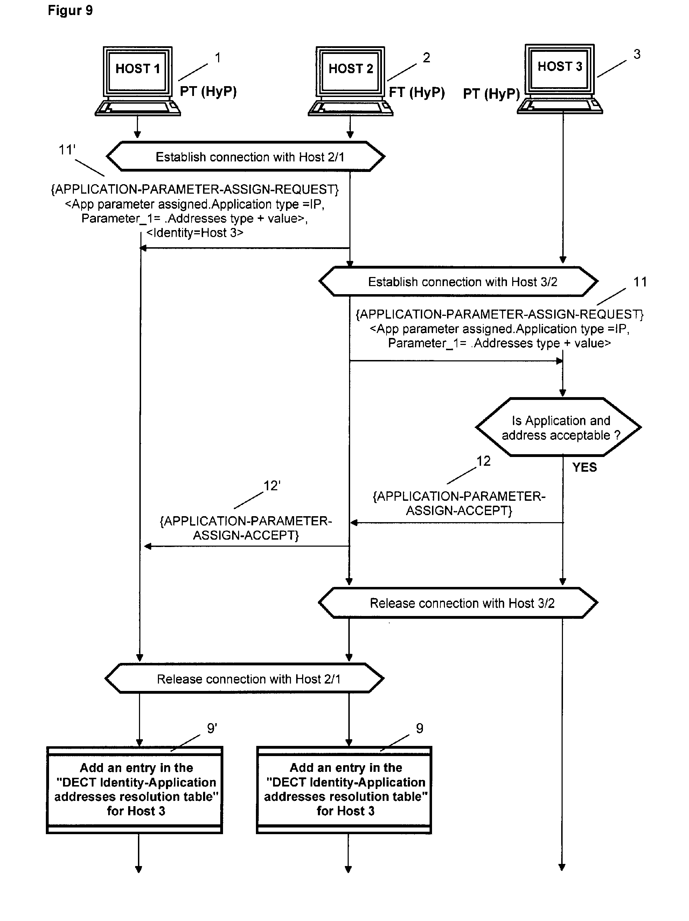

Figur 9 zeigt ein Beispiel für den Ablauf einer PT-initiierten "Application Address Allocation" Prozedur, die hier vom als PT agierenden Host 1 eingeleitet ist. Diese verläuft unter Vermittlung des als FT agierenden Hosts 2 ab. Host 1 sendet nach Verbindungsaufbau zum Host 2 an diesen eine Anfrage-Meldung 11', mit der um Parameterzuweisung gebeten wird. Host 2 weist die Parameter nicht selbst zu, sondern stellt eine weitere Verbindung zu Host 3 her und überträgt die Anfrage 11 wie im Beispiel Fig. 8. Wie bereits beschrieben (Fig. 8), bestätigt Host 3 den Vorschlag mit einer Annahme-Meldung 12 oder weist ihn zurück. Der vermittelnde Host 2 teilt die Annahme oder Ablehnung dem initiierenden Host 1 mit einer Meldung 12' mit. Die Verbindungen zu Host 1 und Host 3 werden gelöst. Host 1 und Host 2 tragen die zugewiesenen Parameter in ihre jeweiligen Adresstabellen ein (Verfahrensschritte 9, 9').

In einer weiteren vorteilhaften Verfahrensvariante kann ein initiierendes Terminal in einem DECT-LAN ein weiteres Terminal mit einer bestimmten Identität zur Angabe der seinen Anwendungen zugeordneten Adressen an das initiierende Terminal veranlassen, indem es eine entsprechende Meldung an das Terminal sendet. Diese "Application Address Information" Prozedur kann verbindungsorientiert oder verbindungslos, PT- oder FT- initiiert ablaufen.

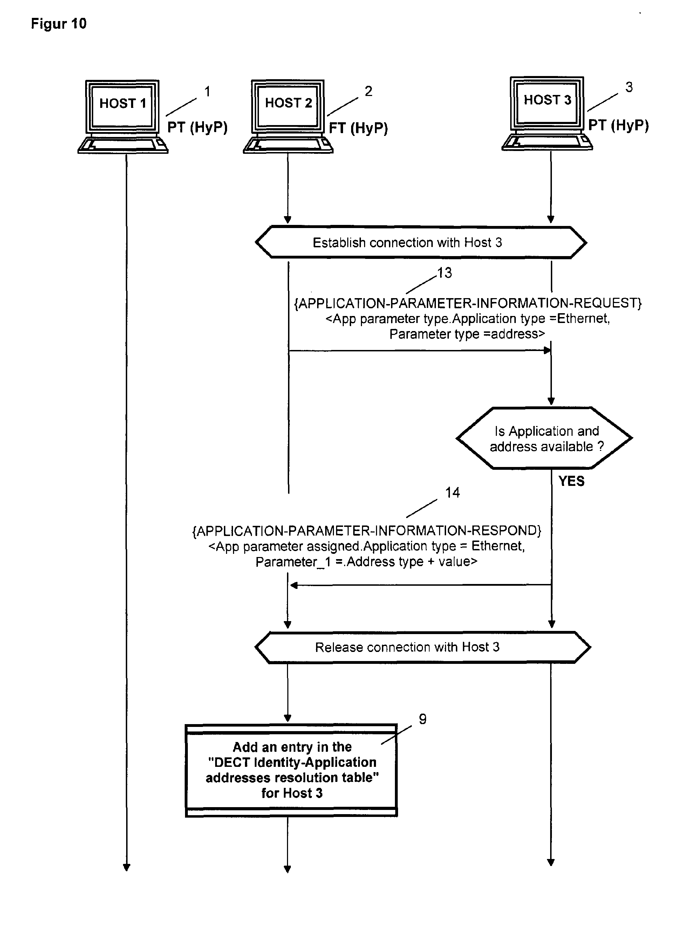

Figur 10 zeigt ein Beispiel für eine verbindungsorientierte von einem FT, hier Host 2, initiierte "Application Address Information" Prozedur. Host 2 generiert eine Meldung 13, mit der ein weiteres Terminal, hier Host 3, um Angabe bestimmter Parameter gebeten wird (Application-parameter-information-request). Diese Anfrage 13 enthält vorzugsweise wenigstens ein Informationselement, das wenigstens einen Anwendungstyp, hier Ethernet, und einen Parametertyp, hier eine Adresse, angibt, zu denen Host 2 Informationen wünscht. Bei Erhalt dieser Meldung 13 überprüft Host 3 die übertragenen Daten und sendet eine Antwort 14, in der er die angefragten Werte, soweit bekannt, angibt (Application-parameter-information-respond). Diese Daten trägt der anfragende Host 2 in seine Adresstabelle ein. Wenn Host 3 zu einem oder mehreren Parametern keine Daten bekannt sind, sendet er eine ablehnende Meldung (Application-parameter-information-reject), in der er dieses mitteilt (nicht dargestellt). Diese Meldung kann Informationen über die Ursache enthalten, weshalb die gewünschten Daten nicht vorhanden sind. Nach Erhalt der Antwort 14 wird die Verbindung zwischen Host 2 und Host 3 wieder gelöst.

Die beschriebene verbindungsorientierte "Application Address Information" Prozedur kann auch von einem als PT agierenden Terminal eingeleitet werden. Dieses generiert eine Meldung, mit der der FT des DECT-LANs um Unterstützung gebeten wird. Diese Meldung enthält neben den bei der FT-initiierten Prozedur enthaltenen Daten auch die Identität des Terminals, für das die Informationen verlangt werden. Der FT führt dann die Prozedur wie in Fig. 10 gezeigt aus und teilt dem anfragenden PT das Ergebnis in einer entsprechenden Antwortmeldung mit.

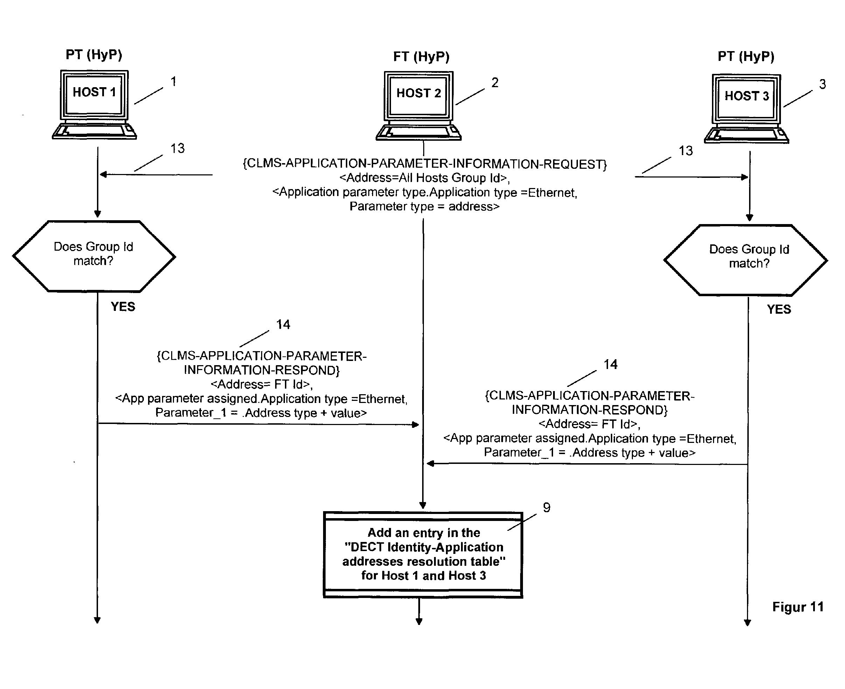

Figur 11 zeigt ein Beispiel für eine verbindungslos ablaufende, vom als FT agierenden Host 2 eingeleitete "Application Address Information" Prozedur. Host 2 sendet eine Anfrage 13 (Application-parameter-information-request) an alle weiteren Terminals des DECT-LANs, hier Host 1 und Host 3. Diese Anfrage 13 enthält einen Adressteil, der die Identitäten der angesprochenen Terminals angibt, beispielsweise eine Gruppenidentität. Die Anfrage 13 enthält weiterhin einen Teil, in dem den Anwendungstyp, hier Ethernet, und der Parametertyp, hier eine Adresse, angegeben sind, zu denen Host 2 Informationen wünscht. Wenn die übrigen Terminals 1, 3 die Anfrage 13 empfangen, prüfen sie zunächst, ob ihre Identität mit der angegebenen Identität übereinstimmt. Wenn dies der Fall ist, wird die Anfrage 13 bearbeitet und die begehrten Informationen in einer Antwortmeldung 14 (Application-parameter-information-respond) zurückgesendet, andernfalls wird sie ignoriert. Wenn einzelne Parameter nicht vom angesprochenen Host 1 bzw. 3 zur Verfügung gestellt werden können, wird dies in einer ablehnenden Antwort (Application-parameter-information-reject) vorzugsweise mit der Fehlerursache mitgeteilt. Der anfragende Host 2 trägt die von den beiden Hosts 1 bzw. 3 erhaltenen Daten in seine Adresstabelle ein (Verfahrensschritt 9).

Diese Prozedur kann auch von einem PT eingeleitet werden. Dieses läuft analog zum in Fig. 5 beschriebenen Verfahren ab, indem der als PT agierende Host 1 bzw. 3 den als FT agierenden Host 2 mit einer entsprechenden Meldung um Unterstützung bittet. Host 2 führt dann die Prozedur wie in Fig. 11 gezeigt durch, falls er nicht bereits selbst die gewünschten Daten besitzt, und teilt dem anfragenden PT das Ergebnis mit. Sowohl der anfragende Host als auch der als FT agierende unterstützende Host tragen die ermittelten Daten in ihre lokale Adresstabelle ein.

In einer weiteren vorteilhaften Weiterbildung der Erfindung stellt ein Terminal eines DECT-LANs von sich aus ohne eine Anfrage von einem anderen Terminal Parameter seiner ihm zugeordneten Anwendungen, insbesondere Adressen, zur Verfügung. Diese "Application Parameter Indication" Prozedur wird vorzugsweise durchgeführt, wenn zwei Terminals sowieso Meldungen austauschen, z.B. beim neuen Anmelden eines Terminals in einem DECT-LAN. Dabei werden die zusätzlichen Informationen vorzugsweise in bekannte verbindungsorientierte Meldungen eingebunden. Alternativ kann eine neue Meldung zur Mitteilung dieser Daten vorgesehen sein (Application-parameter-indicate), die wenigstens den mitgeteilten Anwendungstyp, z.B. Ethernet, und den Parametertyp, z.B. eine Adresse, angibt.

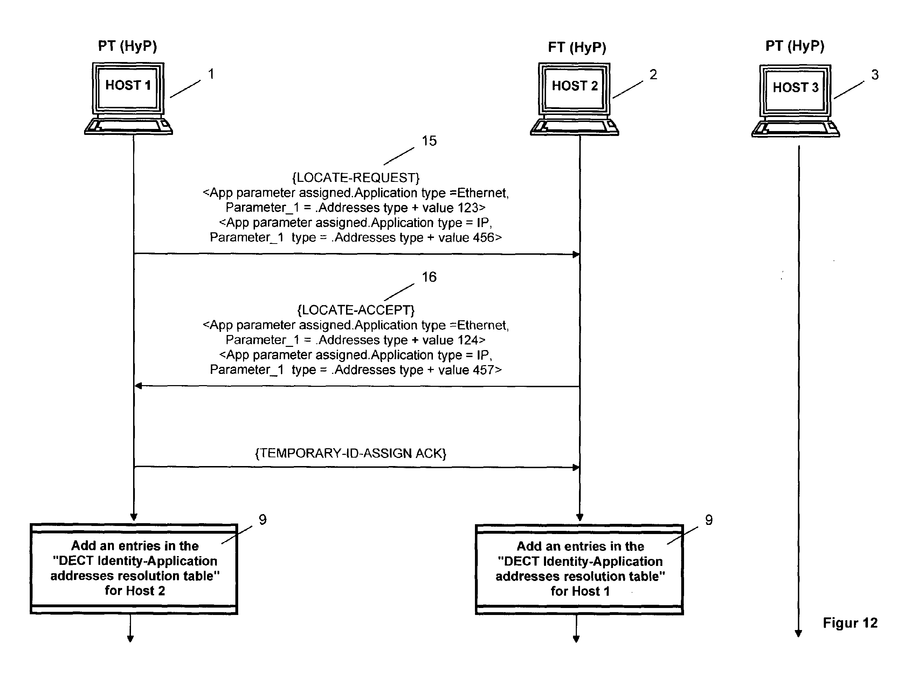

Figur 12 zeigt ein Beispiel, wie diese "Application Parameter Indication" Prozedur eingesetzt werden kann, wenn sich ein Terminal, hier Host 1, neu bei einem als FT des DECT-LANs agierenden Terminal, hier Host 2, anmeldet. Vorliegend wird die bekannte "Location Registration" Prozedur durchgeführt, wobei Host 1 an Host 2 eine "Locate-Request"-Meldung 15 sendet. Zusätzlich zu den üblicherweise übertragenen Daten teilt Host 1 dem als FT agierenden Host 2 in dieser Meldung 15 die Adressen seiner Anwendungen mit, hier die Ethernet-Adresse 123 und die IP-Adresse 456. Beim Bestätigen der Anmeldung durch die "Locate-Accept"-Meldung 16 sendet Host 2 dem neuen Terminal 1 auch die Adressen der eigenen Anwendungen, hier die Ethernet-Adresse 124 und die IP-Adresse 457. Diese Angaben werden von Host 1 und Host 2 jeweils in ihre lokalen Adresstabellen eingetragen (Verfahrensschritt 9).

Um erfindungsgemäss eine Adresse und/oder eine Identität zu übertragen, wird vorzugsweise ein neues Informationselement ("Application Assigned Parameter" Informationselement) verwendet, das in bekannte, nach DECT oder dem DECT-ähnlichen Protokoll definierte Meldungen aufgenommen wird. Alternativ können bereits definierte Informationselemente abgewandelt werden. Vorzugsweise werden die in EN 300 175-5 angegebenen Regeln zur Konstruktion einer S-Format oder B-Format DECT-Meldung angewendet (siehe EN 300 175-5 V1.6.0, 2001-10, Seiten 25, 35 und 36; ferner siehe [2], 5.4.4. Vermittlungsschicht, Seiten 155-162).

Das Informationselement dient zum Transport von Adressen und Identitäten auf DECT-Ebene, hat variable Länge und folgt den Anforderungen von DECT oder dem DECT-ähnlichen Protokoll für die Spezifikation von Informationselementen. Das Informationselement stellt wenigstens ein Protokoll-Diskriminator-Feld zur Verfügung, um das Anwendungsprotokoll zu identifizieren, auf das sich ein oder mehrere übertragene Parameter beziehen, z.B. Ethernet.

Ein weiteres Informationselement "Application Parameter Type" gibt den Typ der Anwendung und den Typ des Parameters an, zu der bzw. dem Informationen gesucht werden.

Die folgende Tabelle zeigt eine mögliche Grundstruktur des "Application Parameter Type"-Informationselements:

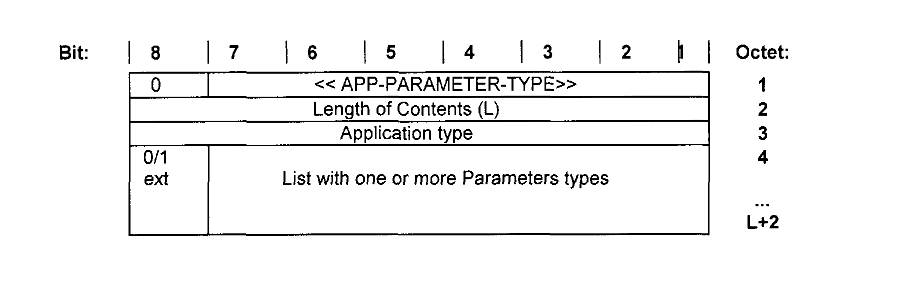

Der Protokolldiskriminator (Application Type) (Oktett 3) ist beispielsweise wie folgt kodiert, wobei auch weitere Protokolle aufgenommen werden können:

| Bits | 8 | 7 | 6 | 5 | 4 | 3 | 2 | 1 | Bedeutung |
|---|---|---|---|---|---|---|---|---|---|
| | 0 | 0 | 0 | 0 | 0 | 0 | 1 | 0 | Ethernet (802.3) |
| | 0 | 0 | 0 | 0 | 0 | 1 | 0 | 0 | IP (RFC1700, RFC2460, RFC2373) |
| | 0 | 0 | 0 | 0 | 0 | 1 | 1 | 0 | Token Ring |
| | 0 | 0 | 0 | 0 | 1 | 0 | 0 | 0 | PPP |
| | 0 | 0 | 0 | 0 | 1 | 0 | 1 | 0 | USB |

Der Parametertyp (Type of parameter) (Oktett 4 und folgende) ist beispielsweise wie folgt kodiert:

| Bits | 7 | 6 | 5 | 4 | 3 | 2 | 1 | Bedeutung |
|---|---|---|---|---|---|---|---|---|
| | 0 | 0 | 0 | 0 | 0 | 0 | 1 | Adresse |
| | 0 | 0 | 0 | 0 | 0 | 1 | 0 | Anderer Parameter |

Die folgende Tabelle zeigt eine mögliche Grundstruktur des "Application-Assigned-Parameter" Informationselements:

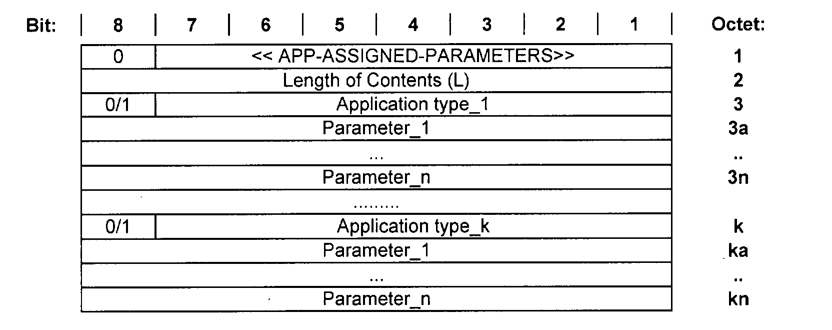

In das Informationselement können verschiedene Gruppen von Oktetts aufgenommen werden, wobei jede Gruppe vorzugsweise wie unten beschrieben definiert wird. Ein Erweiterungsbit zeigt gemäss den DECT-Regeln an, ob mehr als eine Gruppe enthalten ist.

Der Protokolldiskriminator (Application Type) (Oktett 3) ist so kodiert, wie oben beim "Application Parameter Type"-Informationselement gezeigt.

Die folgende Tabelle zeigt die Struktur und Kodierung der einzelnen Parameterfelder:

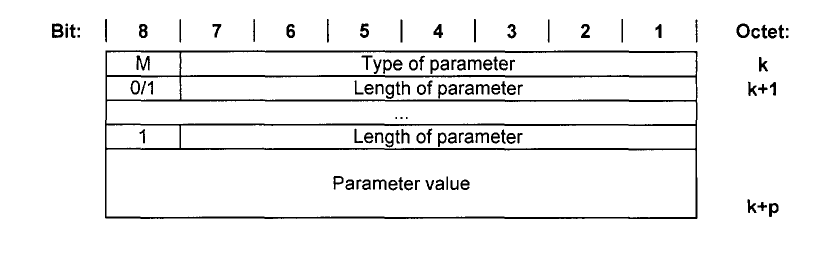

Der Parametertyp (Oktett k) ist wie oben gezeigt kodiert, wobei das M bit (Oktett k) beispielsweise wie folgt kodiert ist:

| Bits 8 | Bedeutung |
|---|---|
| 0 | Keine weiteren Parameter |
| 1 | Weitere Parameter |

Ein Beispiel für ein gesetztes "Application-Assigned-Parameter" Informationselement, das die Ethernet Adresse AC-DE-00-00-80 und die IP Adresse 128.10.2.30 übermittelt, ist in der folgenden Tabelle gezeigt:

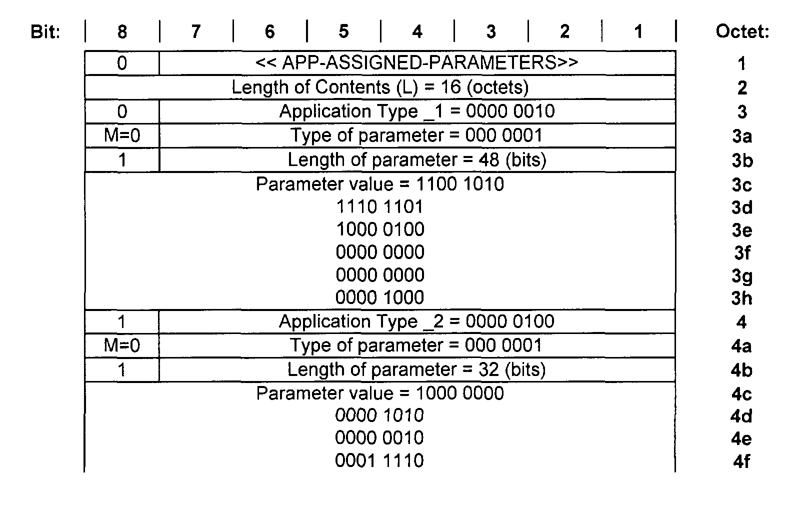

Durch ein einziges Informationselement lassen sich nun die relevanten Anwendungsparameter zwischen den einzelnen Komponenten eines DECT-Netzwerks übertragen.

Das "Application Assigned Parameter" Informationselement und das "Application Parameter Type" Informationselement können in jede DECT-Meldung und in jedes DECT-Informationselement, das andere Informationselemente enthalten kann, eingebunden werden.

Die Information, die die beschriebenen Informationselemente "Application Assigned Parameter" und "Application Parameter Type" enthalten, kann des weiteren auch in andere zur Verfügung stehende DECT-Informationselemente eingebunden werden. Dazu wird der Inhalt dieser Informationselemente entsprechend angepasst.

Um das erfindungsgemässe Verfahren auszuführen, werden vorzugsweise zur Verfügung stehende bekannte DECT-Prozeduren genutzt, die entsprechend der Erfindung angepasst und/oder erweitert werden.

### Literaturverzeichnis

[1] Jerry D. Gibson, THE COMMUNICATIONS HANDBOOK, CRC PRESS, Boca Raton 1997
[2] B. Walke, Mobilfunknetze und ihre Protokolle, Band 2, 2. Auflage, Teubner Verlag, Stuttgart 2000
[3] Andrew S. Tanenbaum, COMPUTER NETWORKS, 3rd Edition, Prentice Hall PTR, New Jersey 1996

## Patentansprüche

1. Verfahren zur drahtlosen Kommunikation zwischen Terminals (1, 2, 3) innerhalb eines lokalen Netzwerks, bei dem die Kommunikation zwischen auf den Terminals (1, 2, 3) laufenden oder mit diesen verbundenen höheren Anwendungen durch Austausch von Datenpaketen abläuft und der Transport dieser Datenpakete zwischen den Terminals (1, 2, 3) drahtlos nach dem DECT-Protokoll oder einem ähnlichen Protokoll erfolgt, **dadurch gekennzeichnet, dass** auf der Ebene des DECT-Protokolls oder des ähnlichen Protokolls wenigstens ein für eine höhere Anwendung kennzeichnender Parameter (Adresse), und/oder wenigstens ein Parameter, der unter dem DECT-Protokoll bzw. dem ähnlichen Protokoll zur Kennzeichnung eines Terminals (1, 2, 3) verwendet wird, (Identität) zwischen Terminals (1, 2, 3) ausgetauscht wird.

2. Verfahren nach Anspruch 1, **dadurch gekennzeichnet, dass** ein Terminal (1, 2, 3) wenigstens eine einem anderen Terminal zugeordnete Adresse und/oder Identität empfängt und die empfangene Adresse zusammen mit der dem anderen Terminal zugeordneten Identität oder die empfangene Identität zusammen mit der dem anderen Terminal (1, 2, 3) zugeordnete Adresse abspeichert.

3. Verfahren nach Anspruch 1 oder 2, **dadurch gekennzeichnet, dass** ein erstes Terminal (1, 2, 3) auf der Ebene des DECT-Protokolls oder des ähnlichen Protokolls die Identität eines Terminals (1, 2, 3) mit einer bestimmten, dem ersten Terminal (1, 2, 3) bekannten Adresse erfragt und eine gegebenenfalls rückgemeldete Identität zusammen mit der bekannten Adresse abspeichert.

4. Verfahren nach einem der vorangegangenen Ansprüche, **dadurch gekennzeichnet, dass** ein anfragendes Terminal (1, 2, 3) zur Feststellung der Identität eines Terminals (1, 2, 3), das eine bestimmte, dem anfragenden Terminal bekannte Adresse hat, die Übertragung einer Meldung mit wenigstens dieser Adresse an wenigstens ein weiteres Terminal veranlasst, vorzugsweise an alle Terminals des lokalen Netzwerks, wobei jedes Terminal, das diese Meldung empfängt, die Übereinstimmung von ihm zugewiesenen Adressen mit der übertragenen Adresse feststellt und im Falle der Übereinstimmung die Rückübertragung einer Meldung mit seiner Identität und vorzugsweise auch der übertragenen Adresse an das anfragende Terminal (1, 2, 3) veranlasst ("Identity Resolution"-Prozedur).

5. Verfahren nach einem der vorangegangenen Ansprüche, **dadurch gekennzeichnet, dass** ein erstes Terminal (1, 2, 3) auf der Ebene des DECT-Protokolls oder des ähnlichen Protokolls wenigstens eine Adresse eines Terminals (1, 2, 3) mit einer bestimmten, dem ersten Terminal (1, 2, 3) bekannten Identität erfragt und eine gegebenenfalls rückgemeldete Adresse zusammen mit der bekannten Identität abspeichert.

6. Verfahren nach einem der vorangegangenen Ansprüche, **dadurch gekennzeichnet, dass** ein anfragendes Terminal (1, 2, 3) zur Feststellung wenigstens einer Adresse eines Terminals (1, 2, 3), das eine bestimmte, dem anfragenden Terminal (1, 2, 3) bekannte Identität hat, die Übertragung einer Meldung mit wenigstens dieser Identität an wenigstens ein weiteres Terminal veranlasst, vorzugsweise an alle Terminals (1, 2, 3) des lokalen Netzwerks, wobei jedes Terminal (1, 2, 3), das diese Meldung empfängt, die Übereinstimmung von ihm zugewiesenen Identitäten mit der übertragenen Identitäten feststellt und im Falle der Übereinstimmung die Rückübertragung einer Meldung mit wenigstens einer Adresse eines Terminals (1, 2, 3) und vorzugsweise auch der übertragenen Identität an das anfragende Terminal (1, 2, 3) veranlasst ("Application Parameter Resolution"-Prozedur).

7. Verfahren nach einem der vorangegangenen Ansprüche, **dadurch gekennzeichnet, dass** ein erstes Terminal (1, 2, 3) auf der Ebene des DECT-Protokolls oder des ähnlichen Protokolls wenigstens einer Anwendung, die auf einem weiteren Terminal (1, 2, 3) läuft oder mit diesem verbunden ist, wenigstens eine Adresse zuordnet, wobei eine diese Adresse enthaltende Meldung an das weitere Terminal (1, 2, 3) übertragen wird.

8. Verfahren nach Anspruch 7, **dadurch gekennzeichnet, dass** das weitere Terminal (1, 2, 3) an das erste Terminal (1, 2, 3) eine Meldung sendet, mit der das erste Terminal (1, 2, 3) um Bekanntgabe wenigstens einer Adresse für wenigstens eine dem weiteren Terminal (1, 2, 3) zugeordnete Anwendung gebeten wird, wobei vorzugsweise Informationen über die betreffenden Anwendungen übertragen werden, und das erste Terminal (1, 2, 3) die zugewiesene Adresse dem weiteren Terminal (1, 2, 3) in einer weiteren Meldung überträgt. ("Application Parameter Allocation"-Prozedur)

9. Verfahren nach Anspruch 8, **dadurch gekennzeichnet, dass** das weitere Terminal (1, 2, 3) die übertragene zugewiesene Adresse überprüft und eine Meldung an das erste Terminal (1, 2, 3) sendet, falls es die Zuweisung ablehnt, wobei die Meldung vorzugsweise Informationen über die betreffende Anwendung und/oder über alternative Adressen enthält.

10. Verfahren nach einem der vorangegangenen Ansprüche, **dadurch gekennzeichnet, dass** ein erstes Terminal (1, 2, 3) auf der Ebene des DECT-Protokolls oder des ähnlichen Protokolls ein weiteres Terminal (1, 2, 3) zur Übertragung wenigstens einer, vorzugsweise aller Adressen der dem weiteren Terminal (1, 2, 3) zugeordneten Anwendungen an das erste Terminal (1, 2, 3) veranlasst und dass das erste Terminal die rückgemeldeten Adressen abspeichert, vorzugsweise zusammen mit einer vorzugsweise ebenfalls abgefragten und rückgemeldeten Identität des weiteren Terminals (1, 2, 3).

11. Verfahren nach einem der vorangegangenen Ansprüche, **dadurch gekennzeichnet, dass** ein anfragendes Terminal zur Feststellung von wenigstens einer, vorzugsweise einer Mehrzahl von Adressen eines anderen Terminals die Übertragung einer Meldung an wenigstens ein weiteres Terminal veranlasst, vorzugsweise an alle Terminals (1, 2, 3) des lokalen Netzwerks, wobei jedes Terminal (1, 2, 3), das diese Meldung empfängt, die Rückübertragung einer Meldung mit wenigstens einer ihm zugeordneten Adresse und vorzugsweise auch seiner Identität an das anfragende Terminal (1, 2, 3) veranlasst ("Application Parameter Information"-Prozedur).

12. Verfahren nach einem der vorangegangenen Ansprüche, **dadurch gekennzeichnet, dass** ein Terminal (1, 2, 3) von sich aus die Übertragung einer Meldung an wenigstens ein weiteres Terminal (1, 2, 3) veranlasst, vorzugsweise an alle Terminals (1, 2, 3) des lokalen Netzwerks, wobei die Meldung wenigstens eine dem Terminal (1, 2, 3) zugeordnete Adresse und vorzugsweise auch seine Identität enthält ("Application Parameter Indication"-Prozedur).

13. Verfahren nach einem der vorangegangenen Ansprüche, **dadurch gekennzeichnet, dass** Meldungen, mit denen die wenigstens eine Adresse und/oder Identität wenigstens eines Terminals (1, 2, 3) übertragen wird, auf der Ebene des DECT-Protokolls oder des ähnlichen Protokolls in einem verbindungsorientierten oder verbindungslosen Modus übertragen werden.

14. Verfahren nach einem der vorangegangenen Ansprüche, **dadurch gekennzeichnet, dass** die Meldungen, mit denen die wenigstens eine Adresse und/oder Identität wenigstens eines Terminals (1, 2, 3) übertragen wird, ein Informationselement enthalten, welches die angefragten Adressen und/oder Identitäten und/oder die einer Adresse bzw. Identität zugeordneten Anwendungen angibt.
